# FASCICULE DE BREVET EUROPEEN

(11) **EP 2 811 553 B1**
(45) Date de publication et mention de la délivrance du brevet: **09.03.2016**
(21) Numéro de dépôt: 14170069.0
(22) Date de dépôt: 27.05.2014
(51) Int. Cl.: H01M 4/32, H01M 4/62, H01M 4/04, H01M 4/24, H01M 4/66, H01M 4/74, H01M 4/36

(54) **Electrode plastifiée pour accumulateur alcalin**
Kunststoffelektrode für alkalischen Akkumulator
Plastic-coated electrode for alkaline storage battery

(30) Priorité: 03.06.2013 FR 1355044
(43) Date de publication de la demande: 10.12.2014
(73) Titulaire: SAFT, 93170 Bagnolet (FR)
(72) Inventeur: Goubault, Lionel, 33360 Carigan de Bordeaux (FR); Bernard, Patrick, 33000 Bordeaux (FR); Gillot, Stéphane, 33440 Ambares (FR)
(74) Mandataire: Hirsch & Associés

(56) Documents cités:
- EP-A1- 2 254 179
- WO-A1-2012/043765
- US-A1- 2003 017 394

## Description

### DOMAINE TECHNIQUE

Le domaine technique auquel se rapporte l'invention est celui des électrodes positives plastifiées pour accumulateur (générateur électrochimique) à électrolyte alcalin, par exemple de type NiCd, NiMH ou NiZn.

### ETAT DE LA TECHNIQUE.

Les électrodes non frittées, dites aussi plastifiées, comprennent généralement un support conducteur de courant sur lequel on dépose par enduction une pâte comprenant une matière électrochimiquement active. Les électrodes non frittées au nickel utilisent généralement un support conducteur tridimensionnel de grande porosité (supérieure à 90%), de type mousse ou feutre de nickel. Une analyse des coûts par composant d'une électrode positive conventionnelle fait apparaître que le support de l'électrode positive, représente plus de 50% du coût de l'électrode.

Une électrode positive non frittée comportant un support conducteur de courant bon marché a été développée pour réduire le coût des accumulateurs. Cette électrode utilise un support conducteur bidimensionnel et une pâte comprenant une matière électrochimiquement active à base d'hydroxyde de nickel, un composé conducteur et un liant.

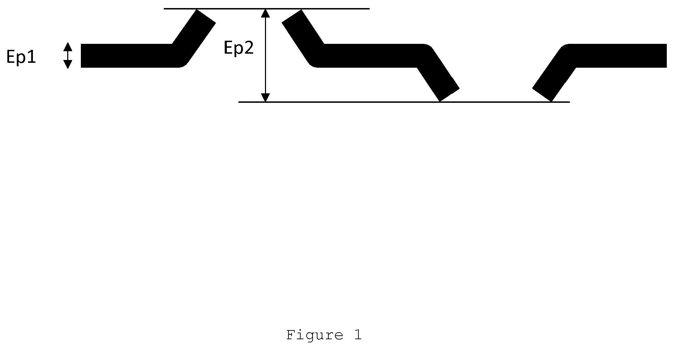

Le support conducteur de courant bidimensionnel peut être un feuillard plein, un métal déployé, une grille, dont l'épaisseur est en général inférieure ou égale à 150 µm. Il peut également être un feuillard perforé. Une coupe d'un feuillard perforé est représentée figure 1. Cette coupe montre des zones non perforées d'épaisseur Ep1 et des zones perforées dont l'épaisseur crête à crête est Ep2.

Lorsque le support conducteur ne possède pas une structure tridimensionnelle permettant de maintenir la matière active dans l'électrode, comme dans le cas d'une mousse ou d'un feutre de nickel, le liant doit assurer durant le fonctionnement de l'accumulateur, la cohésion des grains de matière active entre eux et leur adhésion au support de l'électrode. Son rôle dans l'électrode est donc essentiel. Il doit présenter des propriétés d'adhésion vis-à-vis de la matière active et du support métallique ainsi que des propriétés d'élasticité afin de supporter les déformations qui ont lieu lors de la fabrication de l'accumulateur et lors de son fonctionnement en cyclage. Le liant doit aussi posséder une stabilité chimique suffisante vis-à-vis de l'électrolyte qui est fortement basique, et être résistant à l'oxydation électrochimique du fait du potentiel oxydant de l'électrode positive et de l'oxygène généré en fin de charge de l'électrode. L'oxydation du liant en milieu aqueux entraîne une consommation des ions hydroxyles de l'électrolyte et la formation d'ions carbonates. Cela conduit à dégrader la conductivité ionique de l'électrolyte et les performances de l'accumulateur notamment à fort régime de décharge. En outre, l'oxydation du liant à l'électrode positive génère en parallèle une réaction de réduction à l'électrode négative. La capacité négative excédentaire diminue ainsi proportionnellement à la quantité d'électrons générée par la réaction d'oxydation du liant. Lorsque l'excédent de capacité négative devient nul, l'électrode négative génère de l'hydrogène gazeux en charge. La pression dans l'élément augmente jusqu'à l'ouverture de la soupape de sécurité. Il s'ensuit un assèchement rapide de l'accumulateur et une forte dégradation irréversible de la capacité.

Le polytétrafluoroéthylène (PTFE) utilisé comme liant dans les électrodes positives conventionnelles de type mousse est un polymère stable en milieu basique et résistant à l'oxydation. Mais ce polymère n'est pas suffisamment adhésif et souple pour obtenir une électrode positive plastifiée présentant une tenue mécanique satisfaisante.

De nouvelles solutions ont été développées pour résoudre le problème de la tenue mécanique de l'électrode positive non-frittée.

Dans le brevet FR 2906083, on propose une électrode positive plastifiée comprenant un élastomère qui est un copolymère d'éthylène et d'acétate de vinyle (EVA). Avec une quantité d'EVA inférieure ou égale à 1% en masse par rapport à la masse totale sèche de pâte, la tenue mécanique de l'électrode est satisfaisante. Mais, après 50 cycles à 55°C, on observe une forte augmentation de l'autodécharge qui est due à l'apparition de micro courts-circuits, suite à la migration de particules de matière positive dans le séparateur.

Dans la demande EP 2254179, on propose une électrode positive plastifiée comportant comme liant un mélange de carboxyméthylcellulose (CMC), d'EVA et de PTFE, ce qui permet de résoudre le problème de l'augmentation de l'autodécharge après cyclage. En effet, le PTFE présente la propriété de former un réseau de filaments interconnectés qui est très efficace pour empêcher la migration des particules positives vers le séparateur. Néanmoins, lorsque des accumulateurs NiMH comprenant une électrode plastifiée comportant un mélange de CMC, d'EVA et de PTFE sont soumis à un courant de charge permanent à une température de 70°C, leur durée de vie est dégradée par rapport aux accumulateurs NiMH conventionnels. En effet, sous l'effet d'un courant de charge permanent, de l'oxygène gazeux est généré continuellement à l'électrode positive. Dans ces conditions, la réaction d'oxydation de l'EVA en carbonates est rapide. On peut penser que les carbonates vont former une couche bloquante sur la surface de l'alliage hydrurable de l'électrode négative, ce qui entraîne une dégradation de la capacité de l'accumulateur.

On recherche un accumulateur à électrolyte alcalin qui présente une durée de vie améliorée lorsqu'il est soumis à un courant de charge permanent et à une température élevée, c'est-à-dire supérieure ou égale à 40°C.

### RESUME DE L'INVENTION

A cet effet, l'invention a pour objet une électrode positive non frittée pour accumulateur alcalin, comprenant :
- un support métallique conducteur de courant d'épaisseur inférieure ou égale à 150 microns et
- une pâte comprenant une matière électrochimiquement active à base d'hydroxyde de nickel et un liant ;
le liant comprenant :
A) au moins un copolymère de tétrafluoroéthylène et de propylène en un pourcentage massique 'a' par rapport à la masse de pâte tel que 0,5%<a<4%;
B) au moins un polymère fluoré autre qu'un copolymère de tétrafluoroéthylène et de propylène, en un pourcentage massique 'b' par rapport à la masse de pâte tel que 0,6%<b<4%;
C) au moins un polymère cellulosique et/ou un polymère de l'acide acrylique, en un pourcentage massique 'c' par rapport à la masse de pâte tel que 0,1%<c<0,9%; et 1,2%<a+b+c<6%.

Selon un mode de réalisation, le polymère fluoré est choisi dans le groupe consistant en le polytétrafluoroéthylène (PTFE), l'hexafluoropropylène (HFP), un copolymère d'hexafluoropropylène et de tétrafluoroéthylène (FEP), un polymère perfluororalkoxy (PFA), et un mélange de ceux-ci.

Selon un mode de réalisation, le polymère cellulosique est choisi dans le groupe consistant en la carboxyméthylcellulose (CMC), l'hydroxypropylméthylcellulose (HPMC), l'hydroxypropylcellulose (HPC), l'hydroxyéthylcellulose (HEC), et un mélange de ceux-ci.

Selon un mode de réalisation, le copolymère A) de tétrafluoroéthylène et de propylène comprend de 30 à 70% d'unités tétrafluoroéthylène et de 30 à 70% d'unités propylène; le polymère fluoré B) est le polytétrafluoroéthylène et le polymère cellulosique C) est la carboxyméthylcellulose.

Selon un mode de réalisation, 0,8<a<3, de préférence 1≤a≤2.

Selon un mode de réalisation, 1<b<3, de préférence 2≤b<3.

Selon un mode de réalisation, 0,2<c<0,4, de préférence 0,2<c≤0,3.

Selon un mode de réalisation, 3≤a+b+c≤5.

Selon un mode de réalisation, l'électrode comprend du silane de formule générale X-Si(OR)₃,
R pouvant être choisi dans le groupe consistant en les groupements méthyle, éthyle, isopropyle, cyclohexyle ou phényle ;
X pouvant être choisi dans le groupe consistant en les groupements époxy, amine, styrylamine, méthacrylate, vinyle, chloroalkyle.

Selon un mode de réalisation, l'électrode comprend des fibres, de préférence en polypropylène.

Selon un mode de réalisation, la matière électrochimiquement active est un hydroxyde à base de nickel contenant au moins un hydroxyde syncristallisé de cobalt et au moins un hydroxyde syncristallisé de zinc.

Selon un mode de réalisation, la pâte contient un composé à base d'yttrium, d'ytterbium, de niobium ou de strontium.

Selon un mode de réalisation, l'électrode ne comprend ni copolymère d'éthylène et d'acétate de vinyle, ni copolymère de styrène et d'acrylate.

Selon un mode de réalisation, le support conducteur de courant est choisi dans le groupe consistant en un feuillard plein ou perforé, un métal déployé et une grille.

L'invention a également pour objet un accumulateur à électrolyte alcalin comprenant une électrode positive telle que décrite ci-avant.

### BREVE DESCRIPTION DE LA FIGURE

La Figure 1 représente une vue en coupe d'un feuillard perforé.

### EXPOSE DETAILLE DES MODES DE REALISATION DE L'INVENTION

L'électrode positive non frittée selon l'invention comprend un support conducteur de courant et une pâte comprenant une matière électrochimiquement active et un liant.

Le support conducteur de courant bidimensionnel peut être un feuillard plein, un métal déployé, une grille, dont l'épaisseur est en général inférieure ou égale à 150 µm. Il peut également être un feuillard perforé tel que décrit ci-avant. L'épaisseur Ep1 dans la zone non perforée est en général inférieure ou égale à 75 µm, et l'épaisseur crête à crête Ep2 dans la zone perforée est supérieure à l'épaisseur de la zone non perforée, et est par exemple comprise entre 75 et 150 µm. On considère que l'épaisseur d'un feuillard perforé est l'épaisseur crête à crête dans la zone perforée, soit Ep2. Dans un mode de réalisation préféré, Ep1 vaut environ 75 µm et Ep2 vaut environ 110 µm.

De préférence, on utilise un feuillard en acier nickelé perforé, caractérisé par une épaisseur comprise entre 20 et 150 µm, une masse surfacique comprise entre 2 et 6 g/dm², un taux de jour compris entre 20 et 80 %, un diamètre de perforations compris entre 0,1 et 3 mm. De préférence encore, on utilise un feuillard en acier nickelé perforé présentant un taux de jour compris entre 35 et 60 %, un diamètre de perforations compris entre 0,5 et 1,5 mm. De préférence encore, on utilise un feuillard en acier nickelé perforé présentant un taux de jour compris entre 45 et 55 %, un diamètre de perforations compris entre 0,9 et 1,2 mm.

La matière électrochimiquement active est un hydroxyde à base de nickel. On entend par "hydroxyde à base de nickel" un hydroxyde de nickel, un hydroxyde contenant principalement du nickel, mais également un hydroxyde de nickel contenant au moins un hydroxyde syncristallisé d'un élément choisi parmi le zinc (Zn), le cadmium (Cd), le magnésium (Mg) et l'aluminium (Al), et au moins un hydroxyde syncristallisé d'un élément choisi parmi le cobalt (Co), le manganèse (Mn), l'aluminium (Al), l'yttrium (Y), le calcium (Ca), le zirconium (Zr), le cuivre (Cu). Un hydroxyde syncristallisé contenu dans l'hydroxyde de nickel est un hydroxyde formant une solution solide avec l'hydroxyde de nickel, i.e. occupant, en proportion continûment variable, les sites atomiques définis par le réseau cristallin de l'hydroxyde de nickel. De préférence cet hydroxyde possède une forme sphéroïdale et présente une granulométrie comprise entre 7 et 25 µm. L'hydroxyde de nickel peut être de façon préférentielle recouvert par un revêtement à base d'hydroxyde de cobalt éventuellement partiellement oxydé, ou associé à un composé conducteur, constitué principalement de Co(OH)₂.

D'autres composés tels que Co, CoO, LiCoO₂, poudres métalliques, carbones, ZnO, Y₂O₃, Yb₂O₃, Nb₂O₅, SrSO₄, Sr(OH)₂ peuvent être ajoutés à la matière active.

Le liant comprend:
A) au moins un copolymère de tétrafluoroéthylène et de propylène. Dans un mode préféré de réalisation, le copolymère A) de tétrafluoroéthylène et de propylène comprend de 30 à 70% d'unités tétrafluoroéthylène et de 30 à 70% d'unités propylène. Dans un mode préféré de réalisation, sa masse moléculaire est comprise entre 2000 et 1 000 000 g/mole.
B) au moins un polymère fluoré autre qu'un copolymère de tétrafluoroéthylène et de propylène. De préférence, le polymère fluoré B est choisi dans le groupe consistant en le polytétrafluoroéthylène (PTFE), l'hexafluoropropylène (HFP), un copolymère d'hexafluoropropylène et de tétrafluoroéthylène (FEP), un polymère perfluororalkoxy (PFA), et un mélange de ceux-ci. De préférence, le polymère fluoré est PTFE.
C) au moins un polymère cellulosique et/ou un polymère de l'acide acrylique. Le polymère cellulosique peut être choisi dans le groupe consistant en la carboxyméthylcellulose (CMC), l'hydroxypropylméthylcellulose (HPMC), l'hydroxypropylcellulose (HPC), l'hydroxyéthylcellulose (HEC) et un mélange de ceux-ci. De préférence, le polymère cellulosique est la carboxyméthylcellulose.

Dans un mode de réalisation, le liant ne contient pas d'autres polymères que les composés A), B) et C) décrits ci-dessus. Dans un mode de réalisation préféré, le liant ne comprend que le copolymère de tétrafluoroéthylène et de propylène, du polytétrafluoroéthylène et de la carboxyméthylcellulose.

Les polymères A), B) et C) sont solubles dans l'eau ou disponibles en dispersion aqueuse, ce qui facilite la fabrication des électrodes par empâtage par voie aqueuse sur le support conducteur de courant, suivi d'un séchage du support conducteur de courant ainsi recouvert de pâte.

Le pourcentage en masse de chacun des polymères par rapport à la masse totale de pâte sèche sur le support conducteur de courant est noté 'a' pour le polymère A, 'b' pour le polymère B et 'c' pour le polymère C avec :
0,5<a<4, de préférence 0,8<a<3,0, de préférence encore 1≤a≤2. Dans un mode de réalisation, 1≤a<2.
0,6<b<4, de préférence 1<b<3, de préférence encore 2≤b<3 ;
0,1<c<0,9, de préférence 0,2<c<0,4, de préférence encore 0,2<c≤0,3
1,2<a+b+c<6,0, de préférence 3≤a+b+c≤5.

Les pourcentages en masse a, b et c de chacun des polymères A, B et C sont donnés par rapport à la masse totale de pâte enduite sur le collecteur de courant, après séchage de l'électrode.

Selon un mode de réalisation, un silane de formule générale X-Si(OR)₃ est ajouté à la pâte. Le groupement fonctionnel R peut être par exemple un groupement méthyle, éthyle, isopropyle, cyclohexyle ou phényle. Le groupement X peut être par exemple un groupement époxy, amine, styrylamine, méthacrylate, vinyle, chloroalkyle. De préférence, R est un groupement méthyle et X est un groupement époxy. De préférence encore, le silane utilisé est de type 3-glycidoxypropyltrimethoxy-silane.

Selon un mode de réalisation, des fibres conductrices ou non conductrices sont ajoutées à la pâte. De préférence, la quantité de fibres ajoutées est inférieure à 1,5% de la masse de la pâte. De préférence, il s'agit de fibres polymères, de polypropylène par exemple, de diamètre compris entre 10 et 35 µm et de longueur inférieure à 2 mm.

La matière active, les éventuels additifs et le liant sont introduits dans l'eau et mélangés sous agitation à la pâte pour former une pâte aqueuse homogène qui est ensuite déposée sur au moins une des faces du support conducteur de courant. Puis, l'ensemble est séché sous air, par exemple à une température comprise entre 120°C et 150°C, de préférence 130°C. Pour obtenir une électrode positive plastifiée présentant une bonne adhésion entre la matière et le collecteur de courant, le polymère fluoré B autre qu'un copolymère de tétrafluoroéthylène et de propylène doit être introduit séparément des autres composants du liant et en dernier afin de limiter les interactions avec les autres composants du liant.

L'invention a également pour objet un accumulateur alcalin par exemple de type NiMH, NiCd ou NiZn, utilisant une électrode positive non frittée décrite ci-dessus et contenant un électrolyte à base de KOH et/ou NaOH et/ou LiOH et un séparateur par exemple à base de fibres de polyoléfines non traitées, ou traitées par de l'acide acrylique ou sulfonées ou à base de fibres de polyamide.

On forme un faisceau électrochimique en empilant au moins une électrode positive, au moins une électrode négative et au moins un séparateur. Le faisceau électrochimique peut être spiralé et introduit dans un conteneur de format cylindrique. Il peut également avoir une forme plane et être introduit dans un conteneur de format parallélépipédique. Le conteneur est ensuite rempli d'électrolyte.

L'accumulateur peut être de type cylindrique ou prismatique, ouvert, semi-ouvert ou étanche, pour des applications portables (éclairage de sécurité notamment) ou industrielles. Il peut être utilisé dans le domaine de l'automobile, du spatial, des télécommunications, ferroviaire, photovoltaïque.

### EXEMPLES

### Exemple 1 :

L'électrode positive P1 de l'art antérieur est constituée d'un collecteur de courant tridimensionnel de porosité supérieure à 95% qui est une mousse de nickel et d'une couche de matière composée de la matière électrochimiquement active (hydroxyde à base de nickel sous forme pulvérulente et contenant les additifs suivants : cobalt et zinc), d'un conducteur (hydroxyde de cobalt), d'un polymère cellulosique (CMC), d'oxyde d'yttrium et de PTFE selon les proportions massiques notées ci-dessous :

| | |
|---|---|
| Matière active | 88,2% |
| Co(OH)₂ | 10% |
| PTFE | 1% |
| CMC | 0,3% |
| Y₂O₃ | 0,5% |

Le PTFE se présente sous la forme d'une dispersion aqueuse contenant 40% d'eau. Pour réaliser l'électrode, une pâte est tout d'abord fabriquée en mélangeant tous les composants dans une solution d'eau. La pâte est ensuite déposée simultanément sur les deux faces du collecteur de courant de manière homogène. L'ensemble est ensuite séché afin d'en éliminer l'eau, puis laminé à l'épaisseur désirée et découpée pour obtenir une électrode positive.

### Exemple 2 :

L'électrode positive P2 de l'art antérieur est constituée d'un collecteur de courant qui est un feuillard perforé en acier nickelé et d'une couche de matière composée de la matière électrochimiquement active (hydroxyde à base de nickel sous forme pulvérulente et contenant les additifs suivants : cobalt et zinc), d'un conducteur (hydroxyde de cobalt), d'un polymère cellulosique (CMC), de fibres en polypropylène, d'oxyde d'yttrium, d'EVA et de PTFE selon les proportions massiques notées ci-dessous :

| | |
|---|---|
| Matière active | 84,75% |
| Co(OH)₂ | 10% |
| EVA | 1% |
| PTFE | 2,5% |
| CMC | 0,25% |
| Fibres polypropylène | 1,0% |
| Y₂O₃ | 0,5% |

Pour réaliser l'électrode, une pâte est tout d'abord fabriquée en mélangeant tous les composants dans une solution d'eau. Le PTFE est introduit à la fin de la préparation de la pâte. La pâte est ensuite déposée simultanément sur les deux faces du collecteur courant de manière homogène. L'ensemble est ensuite séché afin d'en éliminer l'eau, puis laminé à l'épaisseur désirée et découpée pour obtenir une électrode positive.

### Exemple 3 :

L'électrode positive P3 hors du domaine de l'invention est constituée d'un collecteur de courant qui est un feuillard perforé en acier nickelé et d'une couche de matière composée de la matière électrochimiquement active (hydroxyde à base de nickel sous forme pulvérulente et contenant les additifs suivants : cobalt et zinc), d'un conducteur (hydroxyde de cobalt), de fibres en polypropylène, d'oxyde d'yttrium, et d'un liant qui est mélange d'un copolymère de tétrafluoroéthylène et de propylène (TFE/PP) et d'un polymère cellulosique (CMC) selon les proportions massiques notées ci-dessous :

| | |
|---|---|
| Matière active | 87,25% |
| Co(OH)₂ | 10% |
| TFE/PP | 1% |
| CMC | 0,25% |
| Fibres polypropylène | 1,0% |
| Y₂O₃ | 0,5% |

Le copolymère de tétrafluoroéthylène et de propylène (TFE/PP) contient 55% en mole de monomères de tétrafluoroéthylène et 45% en mole de monomères de propylène.

Le TFE/PP se présente sous la forme d'une dispersion aqueuse contenant 35% d'eau. Pour réaliser l'électrode, une pâte est tout d'abord fabriquée en mélangeant tous les composants dans une solution d'eau. La pâte est ensuite déposée simultanément sur les deux faces du collecteur de courant de manière homogène. L'ensemble est ensuite séché afin d'en éliminer l'eau, puis laminé à l'épaisseur désirée et découpée pour obtenir une électrode positive.

### Exemple 4 :

L'électrode positive P4 hors du domaine de l'invention est constituée d'un collecteur de courant qui est un feuillard perforé en acier nickelé et d'une couche de matière composée de la matière électrochimiquement active (hydroxyde à base de nickel sous forme pulvérulente et contenant les additifs suivants : cobalt et zinc), d'un conducteur (hydroxyde de cobalt), de fibres en polypropylène, d'oxyde d'yttrium, et d'un liant qui est un mélange d'un copolymère de tétrafluoroéthylène et de propylène (TFE/PP) et d'un polymère cellulosique (CMC) selon les proportions massiques notées ci-dessous :

| | |
|---|---|
| Matière active | 85,25% |
| Co(OH)₂ | 10% |
| TFE/PP | 3% |
| CMC | 0,25% |
| Fibres polypropylène | 1,0% |
| Y₂O₃ | 0,5% |

Pour réaliser l'électrode, une pâte est tout d'abord fabriquée en mélangeant tous les composants dans une solution d'eau. La pâte est ensuite déposée simultanément sur les deux faces du collecteur de courant de manière homogène. L'ensemble est ensuite séché afin d'en éliminer l'eau, puis laminé à l'épaisseur désirée et découpée pour obtenir une électrode positive.

### Exemple 5 :

L'électrode positive P5 hors du domaine de l'invention est constituée d'un collecteur de courant qui est un feuillard perforé en acier nickelé et d'une couche de matière composée de la matière électrochimiquement active (hydroxyde à base de nickel sous forme pulvérulente et contenant les additifs suivants : cobalt et zinc), d'un conducteur (hydroxyde de cobalt), de fibres en polypropylène, d'oxyde d'yttrium et d'un liant qui est un mélange comprenant PTFE et un polymère cellulosique (CMC), selon les proportions massiques notées ci-dessous :

| | |
|---|---|
| Matière active | 85,75% |
| Co(OH)₂ | 10% |
| PTFE | 2,5% |
| CMC | 0,25% |
| Fibres polypropylène | 1,0% |
| Y₂O₃ | 0,5% |

Le PTFE se présente sous la forme d'une dispersion aqueuse contenant 50% d'eau. Pour réaliser l'électrode, une pâte est tout d'abord fabriquée en mélangeant tous les composants dans une solution d'eau. La pâte est ensuite déposée simultanément sur les deux faces du collecteur de courant de manière homogène. L'ensemble est ensuite séché afin d'en éliminer l'eau, puis laminé à l'épaisseur désirée et découpée pour obtenir une électrode positive.

### Exemple 6 :

L'électrode positive P6 hors du domaine de l'invention est constituée d'un collecteur de courant qui est un feuillard perforé en acier nickelé et d'une couche de matière composée de la matière électrochimiquement active (hydroxyde à base de nickel sous forme pulvérulente et contenant les additifs suivants : cobalt et zinc), d'un conducteur (hydroxyde de cobalt), de fibres en polypropylène, d'oxyde d'yttrium, et d'un liant qui est un mélange constitué d'un copolymère de tétrafluoroéthylène et de propylène (TFE/PP), de PTFE et d'un polymère cellulosique (CMC), selon les proportions massiques notées ci-dessous :

| | |
|---|---|
| Matière active | 85, 65% |
| Co(OH)₂ | 10% |
| TFE/PP | 0,1% |
| PTFE | 2,5% |
| CMC | 0,25% |
| Fibres polypropylène | 1,0% |
| Y₂O₃ | 0,5% |

Le TFE/PP se présente sous la forme d'une dispersion aqueuse contenant 35% d'eau. Pour réaliser l'électrode, une pâte est tout d'abord fabriquée en mélangeant tous les composants dans une solution d'eau. Le PTFE est introduit à la fin de la préparation de la pâte. La pâte est ensuite déposée simultanément sur les deux faces du collecteur de courant de manière homogène. L'ensemble est ensuite séché afin d'en éliminer l'eau, puis laminé à l'épaisseur désirée et découpée pour obtenir une électrode positive.

### Exemple 7 :

L'électrode positive P7 selon l'invention est constituée d'un collecteur de courant qui est un feuillard perforé en acier nickelé et d'une couche de matière composée de la matière électrochimiquement active (hydroxyde à base de nickel sous forme pulvérulente et contenant les additifs suivants : cobalt et zinc), d'un conducteur (hydroxyde de cobalt), de fibres en polypropylène, d'oxyde d'yttrium, et d'un liant qui est un mélange d'un copolymère de tétrafluoroéthylène et de propylène (TFE/PP), de PTFE et d'un polymère cellulosique (CMC), selon les proportions massiques notées ci-dessous :

| | |
|---|---|
| Matière active | 84,75% |
| Co(OH)₂ | 10% |
| TFE/PP | 1% |
| PTFE | 2,5% |
| CMC | 0,25% |
| Fibres polypropylène | 1,0% |
| Y₂O₃ | 0,5% |

Pour réaliser l'électrode, une pâte est tout d'abord fabriquée en mélangeant tous les composants dans une solution d'eau. Le PTFE est introduit à la fin de la préparation de la pâte. La pâte est ensuite déposée simultanément sur les deux faces du collecteur de courant de manière homogène. L'ensemble est ensuite séché afin d'en éliminer l'eau, puis laminé à l'épaisseur désirée et découpée pour obtenir une électrode positive.

### Exemple 8 :

L'électrode positive P8 selon l'invention est constituée d'un collecteur de courant qui est un feuillard perforé en acier nickelé et d'une couche de matière composée de la matière électrochimiquement active (hydroxyde à base de nickel sous forme pulvérulente et contenant les additifs suivants : cobalt et zinc), d'un conducteur (hydroxyde de cobalt), de fibres en polypropylène, d'oxyde d'yttrium, et d'un liant qui est un mélange d'un copolymère de tétrafluoroéthylène et de propylène (TFE/PP), de PTFE et d'un polymère cellulosique (CMC), selon les proportions massiques notées ci-dessous :

| | |
|---|---|
| Matière active | 83,75% |
| Co(OH)₂ | 10% |
| TFE/PP | 2% |
| PTFE | 2,5% |
| CMC | 0,25% |
| Fibres polypropylène | 1,0% |
| Y₂O₃ | 0,5% |

Pour réaliser l'électrode, une pâte est tout d'abord fabriquée en mélangeant tous les composants dans une solution d'eau. Le PTFE est introduit à la fin de la préparation de la pâte. La pâte est ensuite déposée simultanément sur les deux faces du collecteur de courant de manière homogène. L'ensemble est ensuite séché afin d'en éliminer l'eau, puis laminé à l'épaisseur désirée et découpée pour obtenir une électrode positive.

### Exemple 9 :

L'électrode positive P9 hors du domaine de l'invention est constituée d'un collecteur de courant qui est un feuillard perforé en acier nickelé et d'une couche de matière composée de la matière électrochimiquement active (hydroxyde à base de nickel sous forme pulvérulente et contenant les additifs suivants : cobalt et zinc), d'un conducteur (hydroxyde de cobalt), de fibres en polypropylène, d'oxyde d'yttrium, et d'un liant qui est une mélange d'un copolymère de tétrafluoroéthylène et de propylène (TFE/PP), de PTFE et d'un polymère cellulosique (CMC), selon les proportions massiques notées ci-dessous :

| | |
|---|---|
| Matière active | 80,75% |
| Co(OH)₂ | 10% |
| TFE/PP | 5% |
| PTFE | 2,5% |
| CMC | 0,25% |
| Fibres polypropylène | 1,0% |
| Y₂O₃ | 0,5% |

Pour réaliser l'électrode, une pâte est tout d'abord fabriquée en mélangeant tous les composants dans une solution d'eau. Le PTFE est introduit à la fin de la préparation de la pâte. La pâte est ensuite déposée simultanément sur les deux faces du collecteur de courant de manière homogène. L'ensemble est ensuite séché afin d'en éliminer l'eau, puis laminé à l'épaisseur désirée et découpée pour obtenir une électrode positive.

### Exemple 10 :

L'électrode positive P10 hors du domaine de l'invention est constituée d'un collecteur de courant qui est un feuillard perforé en acier nickelé et d'une couche de matière composée de la matière électrochimiquement active (hydroxyde à base de nickel sous forme pulvérulente et contenant les additifs suivants : cobalt et zinc), d'un conducteur (hydroxyde de cobalt), de fibres en polypropylène, d'oxyde d'yttrium, et d'un liant qui est un mélange d'un copolymère de tétrafluoroéthylène et de propylène (TFE/PP), de PTFE et d'un polymère cellulosique (CMC), selon les proportions massiques notées ci-dessous :

| | |
|---|---|
| Matière active | 85,75% |
| Co(OH)₂ | 10% |
| TFE/PP | 2% |
| PTFE | 0,5% |
| CMC | 0,25% |
| Fibres polypropylène | 1,0% |
| Y₂O₃ | 0,5% |

Pour réaliser l'électrode, une pâte est tout d'abord fabriquée en mélangeant tous les composants dans une solution d'eau. Le PTFE est introduit à la fin de la préparation de la pâte. La pâte est ensuite déposée simultanément sur les deux faces du collecteur de courant de manière homogène. L'ensemble est ensuite séché afin d'en éliminer l'eau, puis laminé à l'épaisseur désirée et découpée pour obtenir une électrode positive.

### Exemple 11 :

L'électrode positive P11 hors du domaine de l'invention est constituée d'un collecteur de courant qui est un feuillard perforé en acier nickelé et d'une couche de matière composée de la matière électrochimiquement active (hydroxyde à base de nickel sous forme pulvérulente et contenant les additifs suivants : cobalt et zinc), d'un conducteur (hydroxyde de cobalt), de fibres en polypropylène, d'oxyde d'yttrium, et d'un liant qui est un mélange d'un copolymère de tétrafluoroéthylène et de propylène (TFE/PP), de PTFE, et d'un polymère cellulosique (CMC), selon les proportions massiques notées ci-dessous :

| | |
|---|---|
| Matière active | 81,25% |
| Co(OH)₂ | 10% |
| TFE/PP | 2% |
| PTFE | 5% |
| CMC | 0,25% |
| Fibres polypropylène | 1,0% |
| Y₂O₃ | 0,5% |

Pour réaliser l'électrode, une pâte est tout d'abord fabriquée en mélangeant tous les composants dans une solution d'eau. Le PTFE est introduit à la fin de la préparation de la pâte. La pâte est ensuite déposée simultanément sur les deux faces du collecteur de courant de manière homogène. L'ensemble est ensuite séché afin d'en éliminer l'eau, puis laminé à l'épaisseur désirée et découpée pour obtenir une électrode positive.

### Exemple 12 :

L'électrode positive P12 hors du domaine de l'invention est constituée d'un collecteur de courant qui est un feuillard perforé en acier nickelé et d'une couche de matière composée de la matière électrochimiquement active (hydroxyde à base de nickel sous forme pulvérulente et contenant les additifs suivants : cobalt et zinc), d'un conducteur (hydroxyde de cobalt), d'un épaississant (CMC), de fibres en polypropylène, d'oxyde d'yttrium, et d'un liant qui est un mélange d'un copolymère de tétrafluoroéthylène et de propylène (TFE/PP), de PTFE et d'un polymère cellulosique (CMC), selon les proportions massiques notées ci-dessous :

| | |
|---|---|
| Matière active | 84,95% |
| Co(OH)₂ | 10% |
| TFE/PP | 1% |
| PTFE | 2,5% |
| CMC | 0,05% |
| Fibres polypropylène | 1,0% |
| Y₂O₃ | 0,5% |

Pour réaliser l'électrode, une pâte est tout d'abord fabriquée en mélangeant tous les composants dans une solution d'eau. Le PTFE est introduit à la fin de la préparation de la pâte. La pâte est ensuite déposée simultanément sur les deux faces du collecteur de courant de manière homogène. L'ensemble est ensuite séché afin d'en éliminer l'eau, puis laminé à l'épaisseur désirée et découpée pour obtenir une électrode positive.

### Exemple 13 :

L'électrode positive P13 hors du domaine de l'invention est constituée d'un collecteur de courant qui est un feuillard perforé en acier nickelé et d'une couche de matière composée de la matière électrochimiquement active (hydroxyde à base de nickel sous forme pulvérulente et contenant les additifs suivants : cobalt et zinc), d'un conducteur (hydroxyde de cobalt), de fibres en polypropylène, d'oxyde d'yttrium, et d'un liant qui est un mélange d'un copolymère de tétrafluoroéthylène et de propylène (TFE/PP), de PTFE et de carboxyméthylcellulose (CMC) selon les proportions massiques notées ci-dessous :

| | |
|---|---|
| Matière active | 79,5% |
| Co(OH)₂ | 10% |
| TFE/PP | 1% |
| PTFE | 2,5% |
| CMC | 1% |
| Fibres polypropylène | 1,0% |
| Y₂O₃ | 0,5% |

Pour réaliser l'électrode, une pâte est tout d'abord fabriquée en mélangeant tous les composants dans une solution d'eau. Le PTFE est introduit à la fin de la préparation de la pâte. La pâte est ensuite déposée simultanément sur les deux faces du collecteur de courant de manière homogène. L'ensemble est ensuite séché afin d'en éliminer l'eau, puis laminé à l'épaisseur désirée et découpée pour obtenir une électrode positive.

### Test d'adhésion :

Afin de caractériser leur tenue mécanique, les électrodes subissent un test de chute qui est réalisé de la façon suivante : chaque électrode est pesée, puis lâchée d'une hauteur de 50cm sur une surface plane. La chute est répétée 10 fois. Puis l'électrode est pesée de nouveau. Le résultat du test est exprimé comme le ratio de la masse initiale moins la masse finale rapportée à la masse initiale. Une électrode sera d'autant plus solide que ce ratio sera faible. La perte de matière au test de chute doit être inférieure à 0,5% pour que la tenue mécanique de l'électrode soit jugée acceptable.
• Résultats du test d'adhésion :

**Tableau 1 : Compositions de l'art antérieur**

| Electrode | P1 | P2 |
|---|---|---|
| Collecteur de courant | Mousse | Feuillard |
| %CMC | 0,25 | 0,25 |
| %EVA | 0 | 1 |
| %PTFE | 1 | 2,5 |
| %TFE/PP | 0 | 0 |
| %liant | 1,25 | 3,75 |
| Perte de matière (%) | 0,3 | 0,2 |
| Tenue mécanique | Oui | Oui |

**Tableau 2 : Electrodes dont le liant est uniquement constitué de TFE/PP et de CMC**

| Electrode | P3 | P4 |
|---|---|---|
| Collecteur de courant | Feuillard | |
| %CMC | 0,25 | 0,25 |
| %EVA | 0 | 0 |
| %PTFE | 0 | 0 |
| %TFE/PP | 1 | 3 |
| %liant | 1,25 | 3,25 |
| Perte de matière (%) | 0,9 | 0,4 |
| Tenue mécanique | Non | Oui |

**Tableau 3 : Electrodes dont le liant est composé d'un mélange de TFE/PP, PTFE et de CMC**

| Electrode | P5* | P6* | P7 | P8 | P9* | P10* | P11* | P12* | P13* |
|---|---|---|---|---|---|---|---|---|---|
| Collecteur de courant | Feuillard | | | | | | | | |
| %CMC | 0,25 | 0,25 | 0,25 | 0,25 | 0,25 | 0,25 | 0,25 | 0,05 | 1 |
| %EVA | | 0 | 0 | 0 | 0 | 0 | 0 | 0 | 0 |
| %PTFE | 2,5 | 2,5 | 2,5 | 2,5 | 2,5 | 0,5 | 5 | 2,5 | 2,5 |
| %TFE/PP | 0 | 0,1 | 1 | 2 | 5 | 2 | 2 | 1 | 1 |
| %liant | 2,75 | 2,75 | 3,75 | 4,75 | 7,75 | 2,75 | 7,25 | 3,55 | 4,5 |
| Perte de matière active(%) | 3,1 | 2,3 | 0,2 | 0,2 | 0,2 | 0,4 | 0,2 | 0,5 | 0,2 |
| Tenue mécanique | non | non | oui | oui | oui | oui | oui | oui | oui |

| | | | | | | | | | |
|---|---|---|---|---|---|---|---|---|---|
| * exemple hors de l'invention | | | | | | | | | |

Les résultats du test de chute montrent que la tenue mécanique des électrodes positives plastifiées dont le liant comporte au moins CMC et TFE/PP, avec un pourcentage de TFE/PP supérieur ou égal à 1% est satisfaisante (P7-P13) alors qu'un mélange de CMC et de PTFE ne permet pas d'obtenir une tenue mécanique correcte (P5). Un mélange comprenant TFE/PP, PTFE et CMC, dans lequel TFE/PP est présent en un pourcentage de 0,1% (P6) ne permet pas d'obtenir une tenue mécanique correcte.

La tenue mécanique des électrodes est satisfaisante lorsque le liant est un mélange de TFE/PP, PTFE et CMC, avec un pourcentage de TFE/PP compris entre 1 et 5% et un pourcentage de PTFE compris entre 0,5 et 2,5% (P7-P13). L'ajout de PTFE doit contribuer à renforcer la cohésion de la matière enduite, ce qui explique que la perte de matière au test de chute de l'électrode P7 (0,25%CMC ; 1%TFE/PP ; 2,5%PTFE) soit de 0,2% en comparaison avec 0,9% pour l'électrode P3 (0,25%CMC ; 1%TFE/PP).

### Evaluation électrochimique en accumulateur étanche NiMH :

Seules les électrodes positives présentant une perte de matière active inférieure à 0,5% au test de chute ont été évaluées en accumulateur étanche NiMH.

Un accumulateur étanche NiMH de format AA, dont l'électrode positive est l'électrode limitante, et dont la capacité nominale est de 1100mAh, est constitué d'une électrode positive décrite ci-dessus et d'une électrode négative de type connu qui possède comme matière électrochimiquement active un composé intermétallique capable de former un hydrure en charge.

L'électrode positive est accolée à une électrode négative dont elle est isolée par un séparateur non-tissé de polypropylène pour former le faisceau électrochimique. Le faisceau ainsi spiralé est inséré dans un conteneur métallique et imprégné d'un électrolyte alcalin qui est une solution aqueuse constituée d'un mélange d'hydroxyde de potassium KOH 8N et d'hydroxyde de lithium LiOH 0,5N. La composition de chacun des accumulateurs est décrite dans le tableau 4.

**Tableau 4 : Caractéristiques des accumulateurs NiMH**

| Accumulateur | A | B | C | D | E | F | G | H | I | J |
|---|---|---|---|---|---|---|---|---|---|---|
| Electrode | P1* | P2* | P4* | P7 | P8 | P9* | P10* | P11* | P12* | P13* |
| Substrat | Mousse | Feuillard | | | | | | | | |
| %CMC | 0,25 | 0,25 | 0,25 | 0,25 | 0,25 | 0,25 | 0,25 | 0,25 | 0,05 | 1 |
| %EVA | 0 | 1 | 0 | 0 | 0 | 0 | 0 | 0 | 0 | 0 |
| %PTFE | 1 | 2,5 | 0 | 2,5 | 2,5 | 2,5 | 0,5 | 5 | 2,5 | 2,5 |
| %TFE/PP | 0 | 0 | 3 | 1 | 2 | 5 | 2 | 2 | 1 | 1 |
| %liant | 1,25 | 3,75 | 3,25 | 3,75 | 4,75 | 7,75 | 2,75 | 7,25 | 3,55 | 4,5 |

| | | | | | | | | | | |
|---|---|---|---|---|---|---|---|---|---|---|
| * exemple hors de l'invention | | | | | | | | | | |

▪ Formation électrique :
   Une formation électrique des accumulateurs est effectuée dans les conditions suivantes :
   Cycle 1 :
      Charge pendant 4h au courant de 0,025Ic, où Ic est le courant nécessaire pour décharger la capacité nominale C de l'accumulateur en 1h.
         Charge pendant 3h au courant de 0,33Ic
         Décharge au courant de 0,2Ic jusqu'à une tension de 1V
▪ Performances électriques :
   Après formation, la capacité des accumulateurs est mesurée par les cycles suivants :
      Cycles 2 à 5 :
         Charge pendant 16h au courant de 0,1Ic
         Décharge au courant de 0,2Ic jusqu'à une tension de 1V
      Cycle 6 :
         Charge pendant 16h au courant de 0,1Ic
         Décharge au courant de Ic jusqu'à une tension de 1V
      Cycle 7 :
         Charge pendant 16h au courant de 0,1Ic
         Repos 7 jours à température ambiante
         Décharge au courant de 0,2Ic jusqu'à une tension de 1V
         L'autodécharge initiale est calculée en rapportant la capacité mesurée au cycle 7 à la capacité mesurée au cycle 5.
▪ Evaluation de la durée de vie en surcharge permanente :
   Cycle I :
      Charge pendant 20 jours au courant de 0,05Ic à 70°C Décharge au courant de 0,2Ic jusqu'à une tension de 1V
   Cycle II :
      Charge pendant 16h au courant de 0,1Ic
      Décharge au courant de 0,2Ic jusqu'à une tension de 1V.
   Cycle III :
      Charge pendant 16h au courant de 0,1Ic
      Repos pendant 7 jours à température ambiante
      Décharge au courant de 0,2Ic jusqu'à une tension de 1V
      L'autodécharge est calculée en rapportant la capacité mesurée au cycle III à la capacité mesurée au cycle II.

On reproduit les cycles I, II et III jusqu'à ce que la capacité de l'accumulateur au cycle II soit inférieure ou égale à 40% de la capacité nominale. La durée de vie est déterminée par le temps de surcharge à 70°C effectué lorsque la capacité de l'accumulateur au cycle II est inférieure à 40% de la capacité nominale.
▪ Résultats électriques :

**Tableau 5 : Résultats électriques en accumulateur NiMH**

| Accumulateur | A | B | C | D | E | F | G | H | I | J |
|---|---|---|---|---|---|---|---|---|---|---|
| Electrode | P1* | P2* | P4* | P7 | P8 | P9* | P10* | P11* | P12* | P13* |
| Collecteur de courant | Mousse | Feuillard | | | | | | | | |
| %CMC | 0,25 | 0,25 | 0,25 | 0,25 | 0,25 | 0,25 | 0,25 | 0,25 | 0,05 | 1 |
| %EVA | 0 | 1 | 0 | 0 | 0 | 0 | 0 | 0 | 0 | 0 |
| %PTFE | 1 | 2,5 | 0 | 2,5 | 2,5 | 2,5 | 0,5 | 5 | 2,5 | 2,5 |
| %TFE/PP | 0 | 0 | 3 | 1 | 2 | 5 | 2 | 2 | 1 | 1 |
| %liant | 1,25 | 3,75 | 3,25 | 3,75 | 4,75 | 7,75 | 2,75 | 7,25 | 3,55 | 4,5 |
| Capacité (mAh) au cycle 5 mesurée par décharge à 0,2Ic | 1123 | 1105 | 1068 | 1102 | 1098 | 995 | 1101 | 1041 | 1005 | 1070 |
| Capacité au cycle 6 (mAh) | 1078 | 1050 | 993 | 1058 | 1054 | 836 | 1046 | 895 | 774 | 1035 |
| Perte de capacité (%) au cycle 6 vs. cycle 5 | -4% | -5% | -7% | -4% | -4% | -16% | -5% | -14% | -23% | -5% |
| Autodécharge au cycle 7 (%) | 11% | 10% | 10% | 10% | 9% | 10% | 11% | 10% | 10% | 10% |
| Cycle III (% vs cycle II) après 3 séquences de 20 jours de surcharge | 11% | 13% | 44% | 11% | 12% | 13% | 45% | 11% | 11% | 12% |
| Durée de vie (jours) | 340 | 100 | 300 | 340 | 320 | 280 | 320 | 300 | 280 | 80 |

| | | | | | | | | | | |
|---|---|---|---|---|---|---|---|---|---|---|
| * exemple hors de l'invention | | | | | | | | | | |

Les résultats électriques montrent d'une part que pour des électrodes plastifiées comportant un pourcentage de liant supérieur à 6% (P9 et P11) ou comportant un pourcentage de CMC inférieur à 0,1% (P12), la capacité initiale mesurée sous fort courant de décharge (cycle 6) est nettement inférieure à celle de l'accumulateur conventionnel. En effet, on peut supposer que la conductivité de l'électrode est affectée lorsque la quantité de liant (matériau non conducteur) devient top importante. Par ailleurs, lorsque le pourcentage de CMC est trop faible, on suppose que la répartition des composés du cobalt dans l'électrode n'est pas correcte, ce qui dégrade la conductivité de l'électrode.

D'autre part, l'accumulateur comportant une électrode positive plastifiée de l'art antérieur (P2) présente une durée de vie en surcharge permanente à 70°C de 100 jours versus 340 jours pour l'accumulateur conventionnel (P1). En revanche, les accumulateurs dont l'électrode positive plastifiée comporte un mélange de CMC et de TFE/PP présentent une durée de vie d'au moins 280 jours (P4-P12), exceptée lorsque la quantité de CMC est de 1% (P13). Lorsque la quantité de CMC devient élevée, on suppose que la quantité de carbonates dans l'accumulateur augmente, ce qui favorise le développement d'une couche bloquante à la surface de la matière active de l'électrode négative. Mais seuls les accumulateurs dont l'électrode positive plastifiée comporte un mélange de CMC, de TFE/PP et de PTFE avec un pourcentage en PTFE de 2,5% (P7 et P8) présentent aussi une autodécharge après 60 jours de surcharge similaire à l'accumulateur conventionnel avec un collecteur de courant en mousse (P1).

Ainsi, seuls les accumulateurs comportant une électrode positive plastifiée dont le liant est un mélange de TFE/PP, PTFE et CMC tel que les pourcentages en TFE/PP (a), PTFE (b) et CMC (c) satisfont les relations suivantes : 0,5<a<4,0 ; 0,6<b<4,0 ; 0,1<c<0,9 et 1,2<a+b+c<6,0 présentent une capacité initiale, une autodécharge après une longue période de surcharge et une durée de vie en surcharge à température élevée, similaires à celles de l'accumulateur conventionnel (P1).

## Revendications

1. Electrode positive non frittée pour accumulateur alcalin, comprenant :
- un support métallique conducteur de courant d'épaisseur inférieure ou égale à 150 microns et
- une pâte comprenant une matière électrochimiquement active à base d'hydroxyde de nickel et un liant ;
le liant comprenant :
A) au moins un copolymère de tétrafluoroéthylène et de propylène en un pourcentage massique 'a' par rapport à la masse de pâte tel que 0,5%<a<4%;
B) au moins un polymère fluoré autre qu'un copolymère de tétrafluoroéthylène et de propylène, en un pourcentage massique 'b' par rapport à la masse de pâte tel que 0,6%<b<4%;
C) au moins un polymère cellulosique et/ou un polymère de l'acide acrylique, en un pourcentage massique 'c' par rapport à la masse de pâte tel que 0,1%<c<0,9%; et 1,2%<a+b+c<6%.

2. Electrode selon la revendication 1, dans laquelle le polymère fluoré est choisi dans le groupe consistant en le polytétrafluoroéthylène (PTFE), l'hexafluoropropylène (HFP), un copolymère d'hexafluoropropylène et de tétrafluoroéthylène (FEP), un polymère perfluororalkoxy (PFA), et un mélange de ceux-ci.

3. Electrode selon l'une des revendications précédentes, dans laquelle le polymère cellulosique est choisi dans le groupe consistant en la carboxyméthylcellulose (CMC), l'hydroxypropylméthylcellulose (HPMC), l'hydroxypropylcellulose (HPC), l'hydroxyéthylcellulose (HEC), et un mélange de ceux-ci.

4. Electrode selon l'une des revendications précédentes, dans laquelle :
- le copolymère A) de tétrafluoroéthylène et de propylène comprend de 30 à 70% d'unités tétrafluoroéthylène et de 30 à 70% d'unités propylène ;
- le polymère fluoré B) est le polytétrafluoroéthylène et
- le polymère cellulosique C) est la carboxyméthylcellulose.

5. Electrode selon l'une des revendications précédentes, dans laquelle 0,8<a<3, de préférence 1≤a≤2.

6. Electrode selon l'une des revendications précédentes, dans laquelle 1<b<3, de préférence 2≤b<3.

7. Electrode selon l'une des revendications précédentes, dans laquelle 0,2<c<0,4, de préférence 0,2<c≤0,3.

8. Electrode selon l'une des revendications précédentes, dans laquelle 3≤a+b+c≤5.

9. Electrode selon l'une des revendications précédentes, comprenant du silane de formule générale X-Si(OR)₃,
R pouvant être choisi dans le groupe consistant en les groupements méthyle, éthyle, isopropyle, cyclohexyle ou phényle ;
X pouvant être choisi dans le groupe consistant en les groupements époxy, amine, styrylamine, méthacrylate, vinyle, chloroalkyle.

10. Electrode selon l'une des revendications précédentes, comprenant des fibres, de préférence en polypropylène.

11. Electrode selon l'une des revendications précédentes dans laquelle la matière électrochimiquement active est un hydroxyde à base de nickel contenant au moins un hydroxyde syncristallisé de cobalt et au moins un hydroxyde syncristallisé de zinc.

12. Electrode selon l'une des revendications précédentes, dans laquelle la pâte contient un composé à base d'yttrium, d'ytterbium, de niobium ou de strontium.

13. Electrode selon l'une des revendications précédentes, dans laquelle le support conducteur de courant est choisi dans le groupe consistant en un feuillard plein ou perforé, un métal déployé et une grille.

14. Accumulateur à électrolyte alcalin comprenant une électrode positive qui est selon l'une des revendications 1 à 13.

## Patentansprüche

1. Ungesinterte positive Elektrode für eine alkalische Speicherbatterie, umfassend:
- einen metallischen Strom leitenden Träger mit einer Dicke kleiner oder gleich 150 Mikrometer und
- eine Paste, umfassend ein elektrochemisch aktives Material auf Basis von Nickelhydroxid und ein Bindemittel;
wobei das Bindemittel umfasst:
A) mindestens ein Copolymer aus Tetrafluorethylen und Propylen in einem Masseprozentsatz 'a' in Bezug zur Pastenmasse, dass 0,5%<a<4% ist;
B) mindestens ein anderes fluorhaltiges Polymer als ein Copolymer von Tetrafluorethylen und Propylen in einen Masseprozentsatz 'b' in Bezug zur Pastenmasse, dass 0,6%<b<4% ist;
C) mindestens ein Zellulosepolymer und/oder ein Acrylsäurepolymer in einem Masseprozentsatz 'c' in Bezug zur Pastenmasse, dass 0,1%<c<0,9%; und 1,2%<a+b+c<6% ist.

2. Elektrode nach Anspruch 1, bei der das fluorhaltige Polymer in der Gruppe ausgewählt ist, die in Polytetrafluorethylen (PTFE), Hexafluorpropylen (HFP), einem Copolymer von Hexafluorpropylen und Tetrafluorethylen (FEP), einem Perfluoralkoxy-Polymer (PFA) und einer Mischung derselben besteht.

3. Elektrode nach einem der vorhergehenden Ansprüche, bei der das Zellulosepolymer in der Gruppe ausgewählt ist, die in Carboxymethylzellulose (CMC), Hydroxypropylzellulose (HPC), Hydroxyethylzellulose (HEC) und einer Mischung derselben besteht.

4. Elektrode nach einem der vorhergehenden Ansprüche, bei der:
- das Copolymer A) aus Tetrafluorethylen und Propylen 30 bis 70% Tetrafluorethyleneinheiten und 30 bis 70% Propyleneinheiten umfasst;
- das Fluorpolymer B) das Polytetrafluorethylen ist, und
- das Zellulosepolymer C) die Carboxymethylzellulose ist.

5. Elektrode nach einem der vorhergehenden Ansprüche, bei der 0,8<a<3, vorzugsweise 1≤a≤2, ist.

6. Elektrode nach einem der vorhergehenden Ansprüche, bei der 1<b<3, vorzugsweise 2≤b<3, ist.

7. Elektrode nach einem der vorhergehenden Ansprüche, bei der 0,2<c<0,4, vorzugsweise 0,2≤c≤0,3, ist.

8. Elektrode nach einem der vorhergehenden Ansprüche, bei der 3≤a+b+c≤5 ist.

9. Elektrode nach einem der vorhergehenden Ansprüche, umfassend Silan mit der allgemeinen Formel X-Si(OR)₃,
wobei R in der Gruppe ausgewählt werden kann, die in den Methyl-, Ethyl-, Isopropyl-, Cyclohexyl- oder Phenylgruppierungen besteht;
wobei X in der Gruppe ausgewählt werden kann, die in den Epoxy-, Amin-, Styrylamin-, Methacrylat-, Vinyl-, Chloralkylgrupppierungen besteht.

10. Elektrode nach einem der vorhergehenden Ansprüche, umfassend Fasern, vorzugsweise aus Polypropylen.

11. Elektrode nach einem der vorhergehenden Ansprüche, bei der das elektrochemisch aktive Material ein Hydroxid auf Basis von Nickel ist, umfassend mindestens ein synkristallisiertes Kobalthydroxid und mindestens ein synkristallisiertes Zinkhydroxid.

12. Elektrode nach einem der vorhergehenden Ansprüche, bei der die Paste eine Verbindung auf Basis von Yttrium, Ytterbium, Niobium oder Strontium umfasst.

13. Elektrode nach einem der vorhergehenden Ansprüche, bei der der Strom leitende Träger in der Gruppe ausgewählt ist, die in einem vollen oder perforierten Bandblech, einem Streckmetall und einem Gitter besteht.

14. Speicherbatterie mit alkalischem Elektrolyt, umfassend eine positive Elektrode, die einem der Ansprüche 1 bis 13 entspricht.

## Claims

1. A non-sintered positive electrode for an alkaline accumulator, comprising:
- an electrically conducting metal support with a thickness of less than or equal to 150 microns and
- a paste comprising an electrochemically active material based on nickel hydroxide and a binder;
the binder comprising:
A) at least one copolymer of tetrafluoroethylene and of propylene in a mass percentage 'a' based on the paste mass such that 0.5%<a<4%;
B) at least one fluorinated polymer other than a copolymer of tetrafluoroethylene and of propylene, in a mass percentage 'b' based on the paste mass such that 0.6%<b<4%;
C) at least one cellulose polymer and/or one polymer of acrylic acid in a mass percentage 'c' based on the paste mass such that 0.1%<c<0.9%; and 1.2%<a+b+c<6%.

2. The electrode according to claim 1, wherein the fluorinated polymer is selected from the group consisting of polytetrafluoroethylene (PTFE), hexafluoropropylene (HFP), a copolymer of hexafluoropropylene and of tetrafluoroethylene (FEP), a perfluoroalkoxy polymer (PFA), and a mixture thereof.

3. The electrode according to one of the preceding claims, wherein the cellulose polymer is selected from the group consisting of carboxymethylcellulose (CMC), hydroxypropyl methylcellulose (HPMC), hydroxypropylcellulose (HPC), hydroxyethylcellulose (HEC), and a mixture thereof.

4. The electrode according to one of the preceding claims, wherein:
- the copolymer A) of tetrafluoroethylene and of propylene comprises from 30 to 70% of tetrafluoroethylene units and from 30 to 70% of propylene units;
- the fluorinated polymer B) is polytetrafluoroethylene and
- the cellulose polymer C) is carboxymethylcellulose.

5. The electrode according to one of the preceding claims, wherein 0.8<a<3, preferably 1≤a≤2.

6. The electrode according to one of the preceding claims, wherein 1<b<3, preferably 2≤b<3.

7. The electrode according to one of the preceding claims, wherein 0.2<c<0.4, preferably 0.2<c≤0.3.

8. The electrode according to one of the preceding claims, wherein 3≤a+b+c≤5.

9. The electrode according to one of the preceding claims, comprising silane of general formula X-Si(OR)₃,
R may be selected from the group consisting of methyl, ethyl, isopropyl, cyclohexyl or phenyl groups;
X may be selected from the group consisting of epoxy, amine, styrylamine, methacrylate, vinyl, chloroalkyl groups.

10. The electrode according to one of the preceding claims, comprising fibers, preferably in polypropylene.

11. The electrode according to one of the preceding claims, wherein the electrochemically active material is a hydroxide based on nickel containing at least one syncrystallized cobalt hydroxide and at least one syncrystallized zinc hydroxide.

12. The electrode according to one of the preceding claims, wherein the paste contains a compound of based on yttrium, ytterbium, niobium or strontium.

13. The electrode according to one of the preceding claims, wherein the electrically conducting support is selected from the group consisting of a solid or perforated sheet, a deployed metal and a grid.

14. An accumulator with an alkaline electrolyte comprising a positive electrode which is according to one of claims 1 to 13.
